# EUROPEAN PATENT SPECIFICATION

(11) **EP 3 035 738 B1**
(45) Date of publication and mention of the grant of the patent: **14.03.2018**
(21) Application number: 15200037.8
(22) Date of filing: 15.12.2015
(51) Int. Cl.: H04W 48/10, H04W 76/02

(54) **METHOD FOR CONNECTING APPLIANCE TO NETWORK AND CORRESPONDING DEVICE**
VERFAHREN ZUR VERBINDUNG EINES GERÄTS AN EIN NETZWERK UND DAZUGEHÖRIGES VORRICHTUNG
PROCÉDÉ DE CONNEXION D'UN APPAREIL À UN RÉSEAU ET DISPOSITIF CORRÉSPONDENT

(30) Priority: 15.12.2014 CN 201410777958
(43) Date of publication of application: 22.06.2016
(73) Proprietor: Xiaomi Inc., Beijing 100085 (CN)
(72) Inventor: WANG, Yang, 100085 Haidian District (CN); FU, Qiang, 100085 Haidian District (CN); HOU, Enxing, 100085 Haidian District (CN)
(74) Representative: Sadler, Peter Frederick

(56) References cited:
- US-A1- 2010 165 879
- US-A1- 2013 182 695
- US-A1- 2013 252 547

## Description

### TECHNICAL FIELD

The present disclosure generally relates to the field of computer technology, and more particularly, to a method for connecting an appliance to a network and a device for the same.

### BACKGROUND

With the development of science and technology, more and more smart appliances have come into our daily lives. Generally, smart appliances have a network-connecting function, and users may connect the smart appliances to a wireless network to enjoy more functions provided by the smart appliances.

In order to connect a smart appliance to a wireless network, it is required to send network-connecting information at least containing a network name and a password to the smart appliance through a terminal. After it acquires the network-connecting information, the smart appliance may search the wireless network according to the network name, and then may be connected to the wireless network according to the password.

US patent application US 2010/0165879 describes a device for provisioning a wireless device for connection to a wireless network via a legacy access point. The wireless device supports a wireless protected setup protocol for obtaining the network profile of the network. A user requests the computing device discover wireless devices for provisioning. In response to the user input, the computing device is configured as a soft access point and broadcasts a beacon signal indicating that the access point supports a wireless protected setup protocol, such as Wi-Fi Protected Setup. A request for provisioning is then received by the computing device from the wireless device. A network profile is transmitted from the computing device to the wireless device in accordance with the wireless protected setup protocol. The wireless device may use the profile to connect to the network via the legacy access point using the network profile.

### SUMMARY

In order to solve the problem in the related art, the present disclosure provides a method for connecting an appliance to a network and a device for the same.

According to a first aspect of embodiments of the present disclosure, there is provided a method for connecting an appliance to a network, which is performed by a terminal, the method comprising:
receiving appliance information broadcast by a smart appliance, the appliance information at least containing an appliance identification of the smart appliance;
displaying a prompt for connecting the smart appliance to a wireless network, the current interface of the terminal being a display interface of a list of smart appliances, and displaying the prompt comprising adding the appliance information to the list of smart appliances to be displayed; and
if a connecting instruction triggered by a user according to the prompt is received, connecting the smart appliance to the wireless network according to the connecting instruction. Adding the appliance information to the list of smart appliances to be displayed, comprises determining a smart appliance in the list of smart appliances which has not been connected to the wireless network, and displaying appliance information of the determined smart appliance in a flashing manner, and wherein the flashing frequency of the appliance information is the same as that of a prompting lamp of the smart appliance.

According to a further aspect of embodiments of the present disclosure, there is provided a terminal for connecting an appliance to a network, including:
a processor; and
a memory for storing instructions executable by the processor;
wherein the processor is configured to perform the method of the first aspect.

According to a fourth aspect of embodiments of the present disclosure, there is provided a computer program, which when being executed on a processor, performs the method according to the above first aspect.

According to a fifth aspect of embodiments of the present disclosure, there is provided a computer program product stored on a computer usable medium, comprising computer-readable program means for causing an electronic device to implement the method according to the above first aspect.

The advantageous effects brought by the technical solutions according to the embodiments of the present disclosure may include:
Appliance information broadcast by a smart appliance is received, the appliance information at least containing an appliance identification of the smart appliance; a prompt for connecting the smart appliance to a wireless network is displayed; and if a connecting instruction triggered by a user according to the prompt is received, the smart appliance is connected to the wireless network according to the connecting instruction. Thereby, the terminal may, by scanning, learn about a smart appliance which is broadcasting appliance information, and connect the smart appliance to a wireless network. It may solve a problem that operation for connecting to a network is complex where the smart appliance is required to search a wireless network and be connect to the wireless network by entering a network password, and it may achieve effects of simplifying the operation for connecting a smart appliance to a network and improving efficiency in connecting to network.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig.1 is a flow chart of a method for connecting an appliance to a network according to an exemplary embodiment;
Fig.2A is a flow chart of a method for connecting an appliance to a network according to another exemplary embodiment;
Fig.2B is an interface diagram of a list of smart appliances according to an exemplary embodiment;
Fig.2C is an interface diagram of a list of smart appliances according to another exemplary embodiment;
Fig.2D is an interface diagram of a prompt icon according to an exemplary embodiment;
Fig.2E is an interface diagram of a prompt icon according to another exemplary embodiment;
Fig.2F is an interface diagram of smart-appliance information according to an exemplary embodiment;
Fig.2G is an interface diagram of smart-appliance information according to another exemplary embodiment;
Fig.2H is a schematic diagram showing an interface of a smart-appliance prompt according to an exemplary embodiment;
Fig.2I is a schematic diagram showing a network-selecting interface according to an exemplary embodiment;
Fig.3 is a block diagram of a device for connecting an appliance to a network according to an exemplary embodiment;
Fig.4 is a block diagram of a device for connecting an appliance to a network according to an exemplary embodiment; and
Fig.5 is a block diagram of a device configured to connect an appliance to a network according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

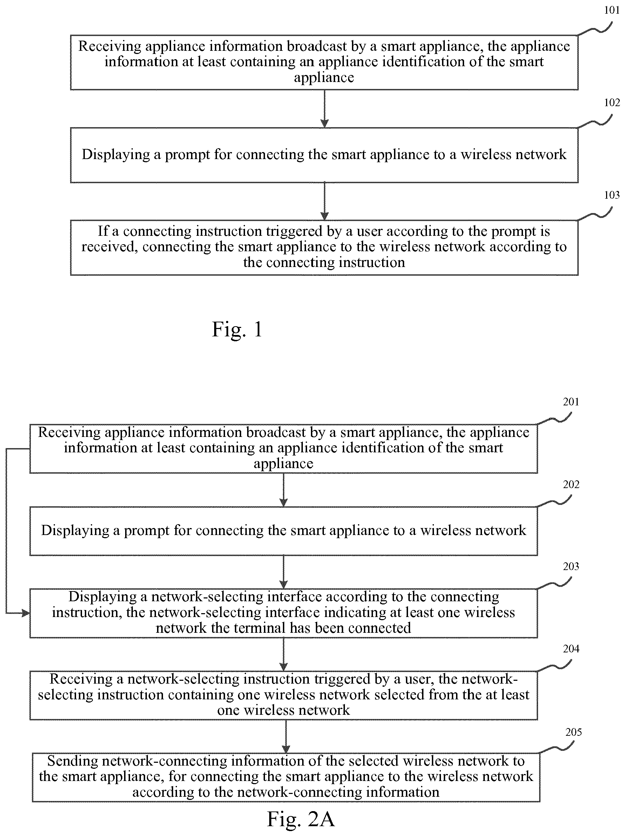

Fig.1 is a flow chart of a method for connecting an appliance to a network according to an exemplary embodiment, which is applied in a terminal. As shown in Fig.1, the method for connecting an appliance to a network includes the following steps.

In step 101, appliance information broadcast by a smart appliance is received, the appliance information at least containing an appliance identification of the smart appliance.

In step 102, a prompt for connecting the smart appliance to a wireless network is displayed.

In step 103, if a connecting instruction triggered by a user according to the prompt is received, the smart appliance is connected to the wireless network according to the connecting instruction.

Accordingly, in the method for connecting an appliance to a network, appliance information broadcast by a smart appliance is received, the appliance information at least containing an appliance identification of the smart appliance; a prompt for connecting the smart appliance to a wireless network is displayed; and if a connecting instruction triggered by a user according to the prompt is received, the smart appliance is connected to the wireless network according to the connecting instruction. Thereby, the terminal may, by scanning, learn about a smart appliance which is broadcasting appliance information, and connect the smart appliance to a wireless network. It may solve a problem that operation for connecting to a network is complex where the smart appliance is required to search a wireless network and be connect to the wireless network by entering a network password, and it may achieve effects of simplifying the operation for connecting a smart appliance to a network and improving efficiency in connecting to network.

Fig.2A is a flow chart of a method for connecting an appliance to a network according to another exemplary embodiment, which is applied in a terminal. As shown in Fig. 2A, the method for connecting an appliance to a network includes the following steps.

In step 201, appliance information broadcast by a smart appliance is received, the appliance information at least containing an appliance identification of the smart appliance.

A smart appliance refers to an appliance having a broadcast function and a network-connecting function, such as a smart socket, a smart camera, an air purifier, a smart remoter, a smart door bell, or the like.

In the present embodiment, the smart appliance may acquire its own appliance information, and broadcast the appliance information periodically, so that a surrounding terminal determines the presence of the smart appliance after receiving the appliance information. Specifically, the appliance information at least contains an appliance identification for exclusively identifying the smart appliance. Optionally, for better describing the smart appliance, the appliance information may also contain introduction to function, an icon, state information, or the like.

In step 202, a prompt for connecting the smart appliance to a wireless network is displayed.

After it receives the appliance information, the terminal may directly connect the smart appliance identified by the appliance information to the wireless network, that is, perform step 203; or the terminal may also display a prompt for connecting the smart appliance to a wireless network, the prompt for prompting a smart terminal which may be connected to the wireless network to the user, and determine whether to connect the smart appliance to the wireless network according to an operation of the user. Specifically, the wireless network may be a Blue Tooth network, a WiFi (Wireless Fidelity) network, or the like.

In a possible implementation, the terminal may display the prompt for connecting the smart appliance to a wireless network through at least one of the following two methods:
1) when a current interface of the terminal is a display interface of a list of smart appliances, the appliance information is added to the list of smart appliances to be displayed; and
2) a prompt icon is displayed in a predetermined item on the current interface of the terminal, the prompt icon indicating that the terminal has received the appliance information.

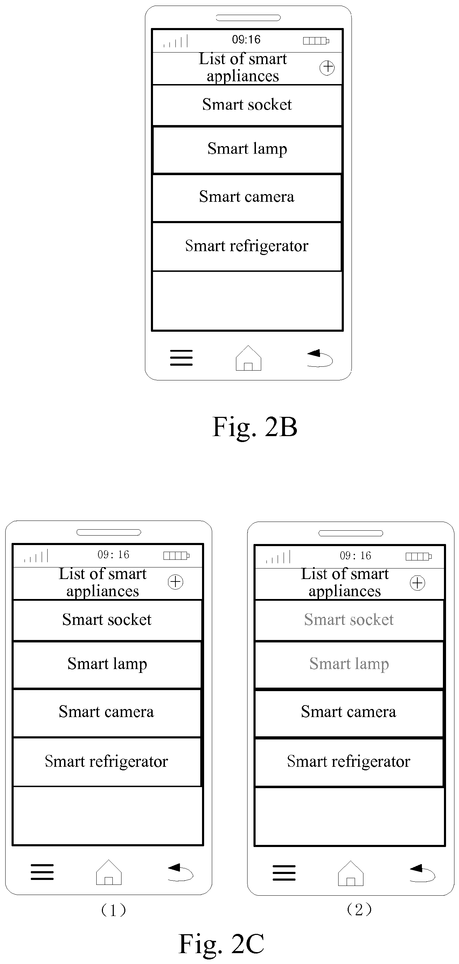

In the first method, the current interface of the terminal is a display interface of a list of smart appliances. The list of smart appliances contains at least one of appliance information of smart appliances which have been connected to the wireless network and appliance information of smart appliances which have not been connected to the wireless network. Referring to Fig.2B, which is a schematic diagram of a first kind of a list of smart appliances, it shows that the smart appliances which have been connected to the wireless network include a smart camera and a smart refrigerator, and the smart appliances which have not been connected to the wireless network include a smart socket and a smart lamp.

When the list of smart appliances contains both smart appliances which have been connected to the wireless network and smart appliances which have not been connected to the wireless network, the terminal may display the smart appliances in an order of receiving time of their appliance information. In this case, the user needs to search a smart appliance which has not been connected to the wireless network in the list of smart appliances, resulting in a rather low searching efficiency. In this regard, the terminal may classify the smart appliances which have been connected to the wireless network and smart appliances which have not been connected to the wireless network, and prompt for the smart appliances which have not been connected to the wireless network, to improve the searching efficiency.

In a possible implementation, the terminal adds the appliance information to the list of smart appliances to display it, including:
it determines a smart appliance in the list of smart appliances which has not been connected to the wireless network, and displays appliance information of the determined smart appliance in a flickering or flashing manner.

The terminal may determine all the smart appliances in the list of smart appliances which have not been connected to the wireless network, and display appliance information of these smart appliances which have not been connected to the wireless network in a flickering or flashing manner. Thereby, the user may quickly acquire appliance information of the smart appliances which have not been connected to the wireless network. Specifically, a flickering or flashing frequency of the appliance information may be the same as that of a prompting lamp of the smart appliances. Referring to Fig.2C, which is a schematic diagram of a second kind of a list of smart appliances, in Fig.2C(1), the appliance information of smart appliances which have not been connected to the wireless network is displayed in a bright state, while in Fig.2C(2), the appliance information of smart appliances which have not been connected to the wireless network is displayed in a dim state.

In addition, the terminal may also display only appliance information of the smart appliances acquired at a current moment in a flickering or flashing manner, to distinguish the smart appliances not connected to the wireless network which are acquired at the current moment from those acquired at past moments. Generally, the smart appliances not connected to the wireless network which are acquired at the past moments are smart appliances which the user does not want to connect to the wireless network. Thus, displaying the smart appliances not connected to the wireless network which are acquired at the current moment and those acquired at the past moments with different manners may assist the user to select a smart appliance which he wants to connect to the wireless network more quickly.

In the second method, the current interface of the terminal may be a display interface of the list of smart appliances, or may be other display interfaces. The terminal may display a prompt icon in the predetermined item on the current interface, to prompt the user that there is a smart appliance which has not been connected to the wireless network. Specifically, the predetermined item is configured to provide an entrance from the current interface to the display interface of the smart appliance which has not been connected to the wireless network.

In a possible implementation, the terminal displays a prompt icon in a predetermined item on the current interface of the terminal, including:
1) displaying a red dot at a predetermined position of the predetermined item; or
2) acquiring a number of the smart appliances, and displaying the number at a predetermined position of the predetermined item.

Specifically, the predetermined position may be a position surrounding the predetermined item, such as at upper right, lower right, or the like. This is not limited in the present embodiment.

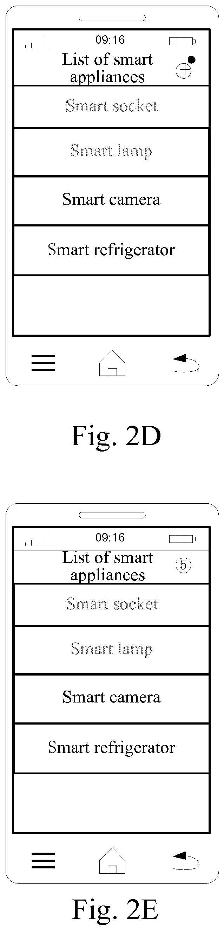

Referring to Fig.2D, which is an interface diagram of a prompt icon. In Fig.2D, for example, a red dot is displayed in the predetermined item on the current interface of the terminal. In this case, the terminal displays the red dot at upper right of a button of the predetermined item on the display interface of the list of smart appliances. After he sees the red dot, the user may determine the presence of the smart appliance which has not been connected to the wireless network.

It should be noted that, the terminal may also display a pattern with other shapes or other colors at the predetermined position of the predetermined item, to prompt the user.

Referring to Fig.2E, which is an interface diagram of another prompt icon. In Fig.2E, for example, the number of smart appliances which have not been connected to the wireless network is displayed in the predetermined item of the current interface of the terminal. Assuming that the terminal acquires that the number of the smart appliances which have not been connected to the wireless network is 5, the number "5" is displayed on the button of the predetermined item.

After it displays a prompt icon in the predetermined item on the current interface, the terminal may also receive a checking instruction triggered by the user according to the predetermined item, and display the appliance information according to the checking instruction.

Specifically, the terminal may display the appliance information of the smart appliances which have not been connected to the wireless network through either of the following methods:
1) turning from the current interface to the display interface of the list of smart appliances, and displaying the appliance information of the smart appliances which have not been connected to the wireless network in the display interface of the list of smart appliances; and
2) displaying the list of smart appliances which have not been connected to the wireless network in the current interface in a form of a pop-up window, and displaying the appliance information of the smart appliances which have not been connected to the wireless network in the list of smart appliances.

It should be noted that, the list of smart appliances which have not been connected to the wireless network may contain appliance information of all the smart appliances which have not been connected to the wireless network, or may also contain appliance information of the smart appliances not connected to the wireless network which are acquired at the current moment. This is not limited in the present embodiment.

Optionally, when it displays the list of smart appliances which have not been connected to the wireless network, the terminal may display a red dot beside each piece of appliance information among all the appliance information as a prompt, or may display a red dot beside appliance information acquired at the current moment as a prompt.

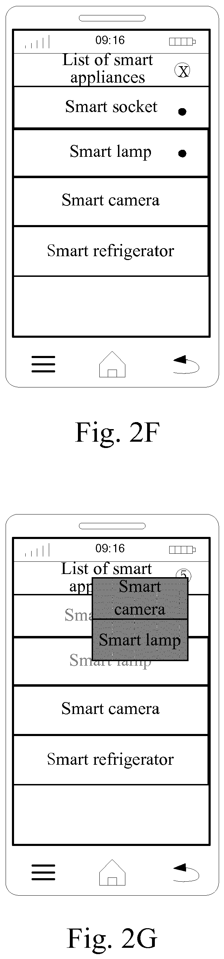

Referring to Fig.2F, which is an interface diagram of smart appliance information. In Fig.2F, the terminal turns from the current interface to the display interface of the list of smart appliances according to the checking instruction triggered by the user.

Referring to Fig.2G, which is another interface diagram of smart appliance information. In Fig.2G, the terminal displays the list of smart appliances which have not been connected to the wireless network in the current interface in a form of a pop-up window, and the list of smart appliances displays appliance information of the smart appliances not connected to the wireless network which are acquired at the current moment.

In step 203, a network-selecting interface is displayed according to the connecting instruction, the network-selecting interface indicating at least one wireless network to which the terminal has been connected.

After he sees the prompt for connecting the smart appliance to the wireless network which is displayed by the terminal, the user may select a smart appliance which he wants to connect to the wireless network according to the prompt, trigger the connecting instruction, the connecting instruction at least containing the appliance identification.

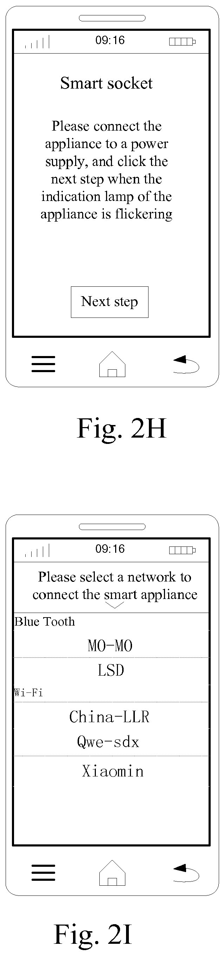

After it receives the connecting instruction triggered by the user according to the prompt, the terminal may also display a prompt message interface for prompting the user to connect the smart appliance to a power supply, as shown in Fig.2H. In Fig.2H, the terminal displays a name of the smart appliance selected by the user, and prompt message of "please connect the appliance to a power supply, and click the next step when the indication lamp of the appliance is flickering/flashing" is displayed below the name.

After an operation instruction of entering the next step triggered by the user is received, if there is only one wireless network currently, the terminal may directly determine the only one wireless network as the wireless network that he wants the smart appliance to be connected to. If there are at least two wireless networks currently, the terminal may select one wireless network from the wireless networks the terminal is connected to, and determine the selected wireless network as the wireless network that he wants the smart appliance to be connected to.

Specifically, the terminal may select a wireless network automatically according to a predetermined selection strategy. For example, the terminal may detect signal quality of the wireless networks, and select a wireless network which has best signal quality. Alternatively, the terminal may also select a default wireless network. However, the terminal may also display a network-selecting interface for indicating wireless networks from which the user may select one to connect the smart appliance. Referring to Fig.2I, which is a schematic diagram of a network-selecting interface, including Blue Tooth networks "MO-MO" and "LSD" and Wi-Fi networks "China-LLR", "Qwe-sdx" and "Xiaomin" which the terminal may be connected to.

In step 204, a network-selecting instruction triggered by a user is received, the network-selecting instruction containing one wireless network selected from the at least one wireless network.

The user may select one wireless network from the wireless networks displayed on the network-selecting interface for connecting the smart appliance, and trigger a network-selecting instruction. Correspondingly, the terminal receives the network-selecting instruction triggered by the user.

Specifically, the user may enter information on the selected wireless network in an input box on the network-selecting interface, or may select information on a wireless network among options of wireless networks presented on the network-selecting interface, and generate the network-selecting instruction according to the information.

In step 205, network-connecting information of the selected wireless network is sent to the smart appliance, for connecting the smart appliance to the wireless network according to the network-connecting information.

Specifically, the network-connecting information at least contains a network identification for identifying a wireless network that the smart appliance may be connected to. Optionally, the network-connecting information may also contain a network password, to improve security of network connection.

The terminal may send the network-connecting information of the wireless network selected by the user according to the network-selecting instruction to the smart appliance. Correspondingly, the smart appliance receives the network-connecting information, and is connected to the wireless network according to the network-connecting information.

After it determines that the smart appliance is connected to a wireless network , the terminal may automatically establish a connection with the smart appliance, and after the connection is established successfully, display the name and connection state of the smart appliance on the interface of the list of smart appliances.

Optionally, the terminal may also display data information collected by the smart appliance on the interface of the list of smart appliances. For example, when the smart appliance is a smart air purifier, the terminal may display the name and the connection state of the smart air purifier on the interface of the list of smart appliances, and also display data information of current air quality inside the room acquired by the smart air purifier.

Accordingly, in the method for connecting an appliance to a network, appliance information broadcast by a smart appliance is received, the appliance information at least containing an appliance identification of the smart appliance; a prompt for connecting the smart appliance to a wireless network is displayed; and if a connecting instruction triggered by a user according to the prompt is received, the smart appliance is connected to the wireless network according to the connecting instruction. Thereby, the terminal may, by scanning, learn about a smart appliance which is broadcasting appliance information, and connect the smart appliance to a wireless network. It may solve a problem that operation for connecting to a network is complex where the smart appliance is required to search a wireless network and be connect to the wireless network by entering a network password, and it may achieve effects of simplifying the operation for connecting a smart appliance to a network and improving efficiency in connecting to network.

In addition, the terminal determines a smart appliance which has not been connected to a wireless network in the list of smart appliances, and display appliance information of the determined smart appliance in a flickering or flashing manner, to dynamically display appliance information of smart appliances which have not been connected to a wireless network in the list smart appliances. Thereby, it may assist the user to select a smart appliance which he wants to connect to the wireless network more quickly, improving the efficiency of searching a smart appliance.

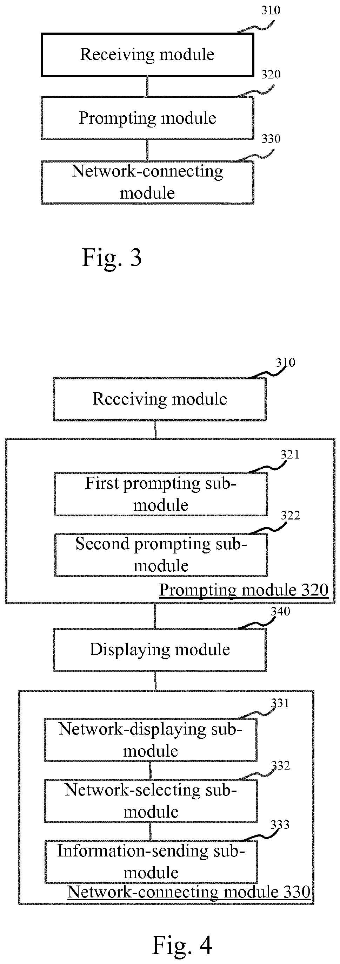

Fig.3 is a block diagram of a device for connecting an appliance to a network according to an exemplary embodiment, which is applied in a terminal. As shown in Fig.3, the device for connecting an appliance to a network includes: a receiving module 310, a prompting module 320 and a network-connecting module 330.

The receiving module 310 is configured to receive appliance information broadcast by a smart appliance, the appliance information at least containing an appliance identification of the smart appliance;
the prompting module 320 is configured to display a prompt for connecting the smart appliance to a wireless network; and
the network-connecting module 330 is configured to, when a connecting instruction triggered by a user according to the prompt is received, connect the smart appliance to the wireless network according to the connecting instruction.

Accordingly, in the device for connecting an appliance to a network, appliance information broadcast by a smart appliance is received, the appliance information at least containing an appliance identification of the smart appliance; a prompt for connecting the smart appliance to a wireless network is displayed; and if a connecting instruction triggered by a user according to the prompt is received, the smart appliance is connected to the wireless network according to the connecting instruction. Thereby, the terminal may, by scanning, learn about a smart appliance which is broadcasting appliance information, and connect the smart appliance to a wireless network. It may solve a problem that operation for connecting to a network is complex where the smart appliance is required to search a wireless network and be connect to the wireless network by entering a network password, and it may achieve effects of simplifying the operation for connecting a smart appliance to a network and improving efficiency in connecting to network.

Fig.4 is a block diagram of a device for connecting an appliance to a network according to an exemplary embodiment, which is applied in a terminal. As shown in Fig.4, the device for connecting an appliance to a network includes: a receiving module 310, a prompting module 320 and a network-connecting module 330.

The receiving module 310 is configured to receive appliance information broadcast by a smart appliance, the appliance information at least containing an appliance identification of the smart appliance;
the prompting module 320 is configured to display a prompt for connecting the smart appliance to a wireless network; and
the network-connecting module 330 is configured to, when a connecting instruction triggered by a user according to the prompt is received, connect the smart appliance to the wireless network according to the connecting instruction.

Optionally, the prompting module 320 includes: a first prompting sub-module 321 or a second prompting sub-module 322.

The first prompting sub-module 321 is configured to, when a current interface of a terminal is a display interface of a list of smart appliances, add the appliance information to the list of smart appliances to be displayed; or,
the second prompting sub-module 322 is configured to display a prompt icon in a predetermined item on the current interface of the terminal, the prompt icon indicating that the terminal has received the appliance information.

Optionally, the first prompting sub-module 321 is configured to determine a smart appliance in the list of smart appliances which has not been connected to the wireless network, and display appliance information of the determined smart appliance in a flickering or flashing manner.

Optionally, the second prompting sub-module 322 is configured to display a red dot at a predetermined position of the predetermined item; or acquire a number of the smart appliances, and display the number at a predetermined position of the predetermined item.

Optionally, the device further includes: a displaying module 340.

The displaying module 340 is configured to receive a checking instruction triggered by a user according to the predetermined item, and display the appliance information according to the checking instruction.

Optionally, the network-connecting module 330 includes: a network-displaying sub-module 331, a network-selecting sub-module 332 and an information-sending sub-module 333.

The network-displaying sub-module 331 is configured to display a network-selecting interface according to the connecting instruction, the network-selecting interface indicating at least one wireless network the terminal has been connected;
the network-selecting sub-module 332 is configured to receive a network-selecting instruction triggered by a user, the network-selecting instruction containing one wireless network selected from the at least one wireless network displayed by the network-displaying sub-module 331; and
the information-sending sub-module 333 is configured to send network-connecting information of the wireless network selected by the network-selecting sub-module 332 to the smart appliance, for connecting the smart appliance to the wireless network according to the network-connecting information.

Accordingly, in the device for connecting an appliance to a network, appliance information broadcast by a smart appliance is received, the appliance information at least containing an appliance identification of the smart appliance; a prompt for connecting the smart appliance to a wireless network is displayed; and if a connecting instruction triggered by a user according to the prompt is received, the smart appliance is connected to the wireless network according to the connecting instruction. Thereby, the terminal may, by scanning, learn about a smart appliance which is broadcasting appliance information, and connect the smart appliance to a wireless network. It may solve a problem that operation for connecting to a network is complex where the smart appliance is required to search a wireless network and be connect to the wireless network by entering a network password, and it may achieve effects of simplifying the operation for connecting a smart appliance to a network and improving efficiency in connecting to network.

In addition, the terminal determines a smart appliance which has not been connected to a wireless network in the list of smart appliances, and display appliance information of the determined smart appliance in a flickering or flashing manner, to dynamically display appliance information of smart appliances which have not been connected to a wireless network in the list smart appliances. Thereby, it may assist the user to select a smart appliance which he wants to connect to the wireless network more quickly, improving the efficiency of searching a smart appliance.

With respect to the devices in the above embodiments, the specific manners for performing operations for individual modules therein have been described in detail in the embodiments regarding the methods for connecting an appliance to a network, which will not be elaborated herein.

An exemplary embodiment of the present disclosure provides a device for connecting an appliance to a network, which may perform the method for connecting an appliance to a network provided by the present disclosure. The device for connecting an appliance to a network includes: a processor; and a memory for storing instructions executable by the processor;
wherein the processor is configured to perform:
receiving appliance information broadcast by a smart appliance, the appliance information at least containing an appliance identification of the smart appliance;
displaying a prompt for connecting the smart appliance to a wireless network; and
if a connecting instruction triggered by a user according to the prompt is received, connecting the smart appliance to the wireless network according to the connecting instruction.

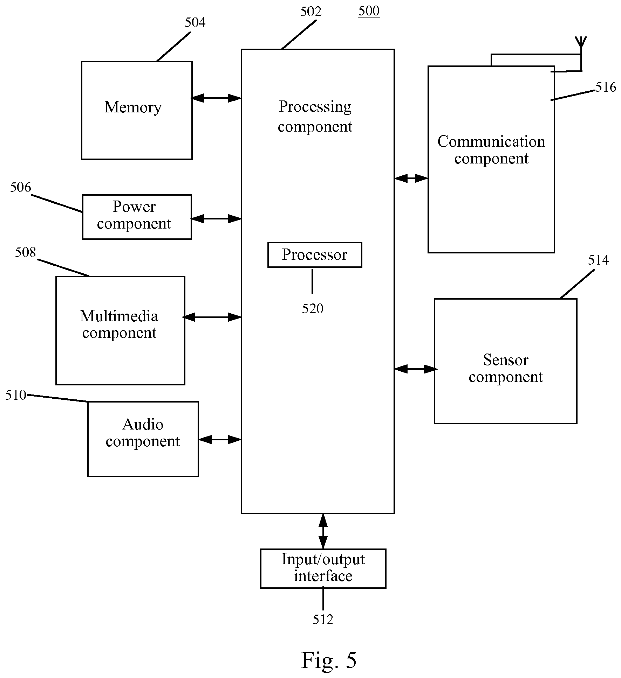

Fig.5 is a block diagram of a device 500 configured to connect an appliance to a network according to an exemplary embodiment. For example, the device 500 may be a mobile phone, a computer, a digital broadcast terminal, a messaging device, a gaming console, a tablet, a medical device, exercise equipment, a personal digital assistant, and the like.

Referring to Fig.5, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above method.

In exemplary embodiments, there is also provided a non-transitory computer-readable storage medium including instructions, such as included in the memory 504, executable by the processor 520 in the device 500, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for connecting an appliance to a network, which is performed by a terminal, the method comprising:
receiving (101, 201) appliance information broadcast by a smart appliance, the appliance information at least containing an appliance identification of the smart appliance;
displaying (102, 202) a prompt for connecting the smart appliance to a wireless network, the current interface of the terminal being a display interface of a list of smart appliances, and displaying the prompt comprising adding the appliance information to the list of smart appliances to be displayed; and
if a connecting instruction triggered by a user according to the prompt is received, connecting (103) the smart appliance to the wireless network according to the connecting instruction;
**characterised in that**:
adding the appliance information to the list of smart appliances to be displayed, comprises determining a smart appliance in the list of smart appliances which has not been connected to the wireless network, and displaying appliance information of the determined smart appliance in a flashing manner, and wherein the flashing frequency of the appliance information is the same as that of a prompting lamp of the smart appliance.

2. The method according to claim 1, wherein, the method further comprises:
receiving a checking instruction triggered by a user according to the predetermined item, and displaying the appliance information according to the checking instruction.

3. The method according to any of claims 1 or 2, wherein, the connecting the smart appliance to the wireless network according to the connecting instruction, comprises:
displaying (203) a network-selecting interface according to the connecting instruction, the network-selecting interface indicating at least one wireless network to which the terminal has been connected;
receiving (204) a network-selecting instruction triggered by a user, the network-selecting instruction containing one wireless network selected from the at least one wireless network; and
sending (205) network-connecting information of the selected wireless network to the smart appliance, for connecting the smart appliance to the wireless network according to the network-connecting information.

4. A terminal (500) for connecting an appliance to a network, the terminal (500) comprising:
a processor (520); and
a memory (504) for storing instructions executable by the processor (520);
wherein the processor is configured to perform the method of any of claims 1 to 3.

5. A computer program, which when executed on a processor of a terminal, causes it to perform the method according to any one of claims 1 to 3.

6. A computer program product stored on a computer readable medium, comprising computer-readable program means that when executed cause an electronic device to implement the method according to any one of claims 1 to 3.

## Patentansprüche

1. Verfahren zum Verbinden eines Gerätes mit einem Netzwerk, das von einem Endgerät ausgeführt wird, wobei das Verfahren Folgendes beinhaltet:
Empfangen (101, 201) von Geräteinformationen, die von einem intelligenten Gerät ausgesendet werden, wobei die Geräteinformationen wenigstens eine Geräteidentifikation des intelligenten Geräts enthalten;
Anzeigen (102, 202) einer Aufforderung zum Verbinden des intelligenten Geräts mit einem drahtlosen Netzwerk, wobei die aktuelle Schnittstelle des Endgeräts eine Schnittstelle zum Anzeigen einer Liste von intelligenten Geräten ist, und Anzeigen der Aufforderung, die das Hinzufügen der Geräteinformationen zu der anzuzeigenden Liste von intelligenten Geräten beinhaltet; und
Verbinden (103), wenn eine von einem Benutzer gemäß der Aufforderung ausgelöste Verbindungsanweisung empfangen wird, des intelligenten Geräts mit dem drahtlosen Netzwerk gemäß der Verbindungsanweisung;
**dadurch gekennzeichnet, dass**:
das Hinzufügen der Geräteinformationen zu der anzuzeigenden Liste von intelligenten Geräten das Bestimmen eines intelligenten Geräts in der Liste von intelligenten Geräten beinhaltet, die nicht mit dem drahtlosen Netzwerk verbunden sind, und Anzeigen von Geräteinformationen des bestimmten intelligenten Gerätes auf blinkende Weise, wobei die Blinkfrequenz der Geräteinformationen dieselbe ist wie die einer Aufforderungslampe des intelligenten Geräts.

2. Verfahren nach Anspruch 1, wobei das Verfahren ferner Folgendes beinhaltet:
Empfangen einer von einem Benutzer gemäß dem vorbestimmten Gegenstand ausgelösten Prüfanweisung und Anzeigen der Geräteinformationen gemäß der Prüfanweisung.

3. Verfahren nach Anspruch 1 oder 2, wobei das Verbinden des intelligenten Geräts mit dem drahtlosen Netzwerk gemäß der Verbindungsanweisung Folgendes beinhaltet:
Anzeigen (203) einer Netzwerkauswahlschnittstelle gemäß der Verbindungsanweisung, wobei die Netzwerkauswahlschnittstelle wenigstens ein drahtloses Netzwerk anzeigt, mit dem das Endgerät verbunden wurde;
Empfangen (204) einer von einem Benutzer ausgelösten Netzwerkauswahlanweisung, wobei die Netzwerkauswahlanweisung ein aus dem wenigstens einen drahtlosen Netzwerk ausgewähltes drahtloses Netzwerk enthält; und
Senden (205) von Netzwerkverbindungsinformationen des gewählten drahtlosen Netzwerks zu dem intelligenten Gerät zum Verbinden des intelligenten Geräts mit dem drahtlosen Netzwerk gemäß den Netzwerkverbindungsinformationen.

4. Endgerät (500) zum Verbinden eines Geräts mit einem Netzwerk, wobei das Endgerät (500) Folgendes umfasst:
einen Prozessor (520); und
einen Speicher (504) zum Speichern von von dem Prozessor (520) ausführbaren Befehlen;
wobei der Prozessor zum Ausführen des Verfahrens nach einem der Ansprüche 1 bis 3 konfiguriert ist.

5. Computerprogramm, das bei Ausführung auf einem Prozessor eines Endgeräts bewirkt, dass dieser das Verfahren nach einem der Ansprüche 1 bis 3 ausführt.

6. Computerprogrammprodukt, das auf einem computerlesbaren Medium gespeichert ist, das computerlesbare Programmmittel umfasst, die bei Ausführung bewirken, dass ein elektronisches Gerät das Verfahren nach einem der Ansprüche 1 bis 3 implementiert.

## Revendications

1. Procédé de connexion d'un appareil réseau, lequel est exécuté par un terminal, le procédé comprenant :
la réception (101, 201) d'informations d'appareil diffusées par un appareil intelligent, les informations d'appareil contenant au moins une identification d'appareil de l'appareil intelligent ;
l'affichage (102, 202) d'une invitation de connexion de l'appareil intelligent à un réseau sans fil, l'interface actuelle du terminal étant une interface d'affichage d'une liste d'appareils intelligents, et l'affichage de l'invitation comprend l'ajout des informations d'appareil à la liste d'appareils intelligents à afficher ; et
si une instruction de connexion déclenchée par un utilisateur conformément à l'invitation est reçue, la connexion (103) de l'appareil intelligent au réseau sans fil en fonction de l'instruction de connexion ;
**caractérisé en ce que** :
l'ajout des informations d'appareil à la liste d'appareils intelligents à afficher comprend la détermination d'un appareil intelligent dans la liste d'appareils intelligents qui n'a pas été connecté au réseau sans fil, et l'affichage d'informations d'appareil de l'appareil intelligent déterminé d'une manière clignotante, et dans lequel la fréquence de clignotement des informations d'appareil est identique à celle d'un témoin d'invitation de l'appareil intelligent.

2. Procédé selon la revendication 1, le procédé comprenant en outre :
la réception d'une instruction de vérification déclenchée par un utilisateur conformément à l'article prédéterminé, et l'affichage des informations d'appareil conformément à l'instruction de vérification.

3. Procédé selon l'une quelconque des revendications 1 ou 2, dans lequel la connexion de l'appareil intelligent au réseau sans fil conformément à l'instruction de vérification comprend
l'affichage (203) d'une interface de sélection de réseau conformément à l'instruction de connexion, l'interface de sélection de réseau indiquant au moins un réseau sans fil auquel le terminal a été connecté ;
la réception (204) d'une instruction de sélection de réseau déclenchée par un utilisateur, l'instruction de sélection de réseau contenant un réseau sans fil sélectionné parmi l'au moins un réseau sans fil ; et
l'envoi (205) d'informations de connexion de réseau du réseau sans fil sélectionné à l'appareil intelligent, afin de connecter l'appareil intelligent au réseau sans fil conformément aux informations de connexion de réseau.

4. Terminal (500) de connexion d'un appareil à un réseau, le terminal (500) comprenant :
un processeur (120) ; et
une mémoire (504) destinée à mémoriser des instructions exécutables par le processeur (520) ;
dans lequel le processeur est configuré pour exécuter le procédé selon l'une quelconque des revendications 1 à 3.

5. Programme informatique, qui, à son exécution sur un processeur d'un terminal, amène celui-ci à exécuter le procédé selon l'une quelconque des revendications 1 à 3.

6. Produit de programme informatique mémorisé sur un support lisible par ordinateur, comprenant des moyens de programme lisibles par ordinateur qui, à leur exécution, amènent un dispositif électronique à mettre en oeuvre le procédé selon l'une quelconque des revendications 1 à 3.
